# EUROPEAN PATENT APPLICATION

(11) **EP 2 835 846 A1**
(43) Date of publication of application: **11.02.2015**
(21) Application number: 14162819.8
(22) Date of filing: 31.03.2014
(51) Int. Cl.: H01M 2/20, H01M 2/30

(54) **Battery pack**

(30) Priority: 08.08.2013 US 201361863614 P; 11.03.2014 US 201414203966
(71) Applicant: Samsung SDI Co., Ltd., Yongin-si, Gyeonggi-do (KR)
(72) Inventor: Kim, Kiwoong, Gyeonggi-do (KR); Choi, Jacky, Gyeonggi-do (KR)
(74) Representative: Mounteney, Simon James

(57) **Abstract**

An embodiment of the present invention provides a battery pack, which can be easily manufactured and accurately can measure the temperature of a battery cell..

## Description

### [Field of the Invention]

Embodiments relate to a battery pack, which can be easily manufactured and accurately can measure the temperature of a battery cell.

### [Description of the Related Art]

In general, secondary batteries are chargeable and dischargeable to be repeatedly used and are widely used for cellular phones, notebook computers, cameras, camcorders, hybrid vehicles, electric vehicles, or electric scooters.

In order to be employed to a high-output requiring device, the secondary batteries are manufactured in the form of a battery pack including a plurality of battery cells. Here, the plurality of battery cells are generally electrically connected by a connection member such as a wire or a nickel plate

Meanwhile, various temperature elements for measuring temperatures of battery cells to control charging and discharging are mounted together in the battery pack. In addition, the temperature elements need to be electrically connected to a protection circuit board, and the temperatures of the battery cells should be accurately measured.

### [Contents of the Invention]

### [Problem To be Solved]

The present invention provides a battery pack, which can be easily manufactured and accurately can measure the temperature of a battery cell.

### [Means for Solving the Problem]

The present invention provides a battery pack as claimed in claims 1 to 14.

In accordance with an embodiment of the present invention, there is provided a battery pack includes at least one battery cell including a positive electrode tab and a negative electrode tab; a protection circuit board electrically connected to the positive electrode tab and the negative electrode tab of the battery cell; and a temperature sensitive element, e.g. a thermistor, formed in the vicinity of a region on the protection circuit board, where the negative electrode tab is connected to the protection circuit board.

Here, a thermal cut-off (TCO) may preferably be formed in the positive electrode tab.

The temperature sensitive element, e.g. a thermistor, may preferably be formed to be spaced a distance of 3 mm or less apart from the negative electrode tab.

In accordance with another embodiment of the present invention, there is provided a battery pack including a plurality of battery cells connected to each other in series or in parallel; a conductive tab positioned between the battery cells connected to each other; a protection circuit board electrically connected to the conductive tab; and a temperature sensitive element, e.g. a thermistor, formed on the protection circuit board in the vicinity of the conductive tab.

The temperature sensitive element, e.g. a thermistor, may preferably be formed to be spaced a distance of 3 mm or less apart from the conductive tab.

In addition, the protection circuit board may preferably further include thermally conductive patterns extending from a region connected to the conductive tab toward the thermistor.

In addition, the thermally conductive patterns may preferably further be formed on the other surface of the protection circuit board opposite to one surface of the protection circuit board connected to the conductive tab, and the thermally conductive patterns may be connected through a via passing through the protection circuit board.

### [Effects of the Invention]

As described above, in the battery pack according to the present invention, a temperature sensitive element, e.g. a chip thermistor, is simply formed in the vicinity of a region where a second, preferably negative, electrode tab of a preferably prismatic battery cell is connected to a protection circuit board without a wire structure, thereby reducing the manufacturing process steps and transmitting heat of the battery cell from a, preferably negative, electrode tab of the battery cell to the temperature sensitive element, e.g. a thermistor, adjacent to the negative electrode tab without loss.

In addition, in the battery pack according to the present invention, a temperature sensitive element, e.g. a chip thermistor, is formed in the vicinity of a region where a conductive tab connecting cylindrical battery cells and a protection circuit board are connected to each other, thereby reducing the manufacturing process steps and transmitting heat of the battery cells without loss.

### [Brief Description of the Drawings]

FIG. 1 is an exploded perspective view of a battery pack according to an embodiment of the present invention;
FIG. 2 is an exploded perspective view illustrating a state in which a thermistor is connected to a protection circuit board in the battery pack shown in FIG. 1;
FIG. 3 is an exploded perspective view of a battery pack according to another embodiment of the present invention;
FIG. 4 is a plan view illustrating a state in which a thermistor is connected to a protection circuit board in the battery pack shown in FIG. 3;
FIG. 5 is a plan view illustrating a state in which a thermistor is connected to a protection circuit board in a battery pack according to still another embodiment of the present invention;
FIG. 6 is a cross-sectional view illustrating a state in which a thermistor is connected to a protection circuit board in a battery pack according to still another embodiment of the present invention; and
FIG. 7is a cross-sectional view illustrating a state in which a thermistor is connected to a protection circuit board in a battery pack according to still another embodiment of the present invention.

**[Explanation of Reference Numerals]**

| | | | |
|---|---|---|---|
| 100, 200: | Battery pack | 110, 210: | Battery cell |
| 211: | High current lines | | |
| 212: | Sensing lines | | |
| 120, 220: | Protection circuit board | | |
| 322, 422, 423, 522: | Thermally conductive pattern | | |
| 424, 524: | Via | | |
| 130, 230, 430, 530: | Thermistor | | |
| 140: | Flexible printed circuit board | | |
| 150: | Circuit module | | |

### [Detailed Description for Carrying out the Invention]

Example embodiments of the present invention will now be described in more detail with reference to accompanying drawings, such that those skilled in the art can easily practice the present invention.

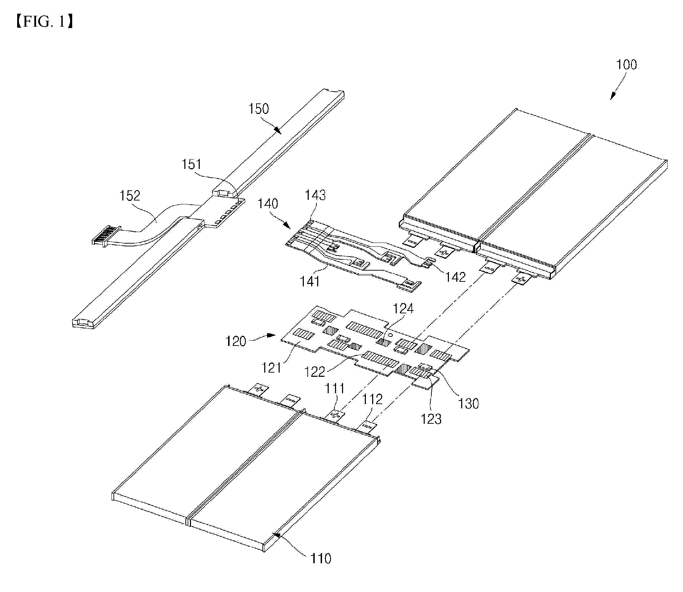

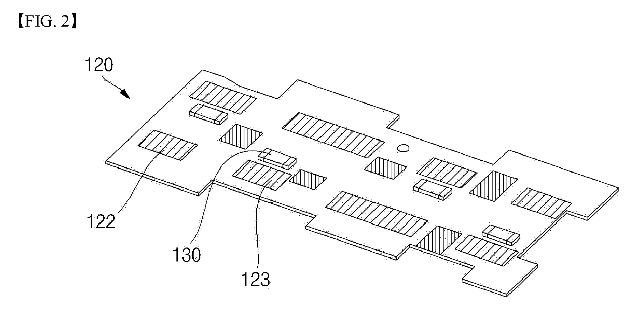

FIG. 1 is an exploded perspective view of a battery pack according to an embodiment of the present invention and FIG. 2 is an exploded perspective view illustrating a state in which a temperature sensitive element, e.g. a thermistor, is connected to a protection circuit board in the battery pack shown in FIG. 1.

Referring to FIGS. 1 and 2, the battery pack 100 according to an embodiment of the present invention includes at least one battery cell 110, a protection circuit board 120, a temperature sensitive element, preferably a thermistor, 130, and a flexible printed circuit board 140. In addition, the battery pack 100 according to an embodiment of the present invention may preferably further include a circuit module 150 connected to the flexible printed circuit board 140.

The battery cell 110 performs a discharging operation of supplying power to an external load and a charging operation of receiving power from a charger, etc. The battery cell 110 may preferably be provided as at least one prismatic battery. In an embodiment of the present invention, the at least one battery cell 110 is preferably provided as four battery cells, but the present invention does not limit the number of the battery cells 110, for example, 2 to 10 or 2 to 8 battery cells may be used. The number of battery cells 110 can be adjusted according to a desired output.

Each of the battery cells 110 includes a first electrode tab, preferably a positive electrode tab, and a second electrode tab, preferably a negative electrode tab. In an embodiment of the present invention the battery cells may preferably include an electrode assembly including a positive electrode plate, a negative electrode plate and a separator interposed between the positive electrode plate and the negative electrode plate accommodated with an electrolytic solution, and a positive electrode tab 111 and a negative electrode tab 112 electrically connected to the electrode assembly and exposed to the outside of the battery cell 110.

The second electrode tab is connected to the protection circuit board by a coupling unit (123, 422, 522) and the temperature sensitive element is in the vicinity of the coupling unit and/or the second electrode tab.

In an embodiment of the present invention, the second electrode tab and/or the coupling unit are spaced a distance of equal to or less than 3 mm from the temperature sensitive element, preferably 0,0 mm to 3.0 mm, optionally 0.05 mm to 2.5 mm, optionally 0.10 to 2.0 mm.

In an embodiment of the present invention, although not shown, the positive electrode tab 111 may preferably include a thermal cut-off (TCO). The TCO is a device that cuts off the flow of current when the temperature of the positive electrode tab 111 exceeds an allowable temperature level. In the battery pack 100 according to an embodiment of the present invention, charging and discharging operations are stopped at a high temperature exceeding the allowable temperature level due to over-charge or over-discharge, thereby achieving safety of the battery pack 100.

In an embodiment of the present invention, the protection circuit board 120 is formed at a region corresponding to electrode tabs 111 and 112 of the battery cell 110 to be overlapped with the electrode tabs 111 and 112 of the battery cell 110 to then be connected thereto. The protection circuit board 120 is electrically connected to the battery cell 110. The protection circuit board 120 may be a rigid printed circuit board or a flexible printed circuit board according to the option made by one skilled in the art.

To this end, in an embodiment of the present invention, the protection circuit board 120 basically includes an insulation layer 121 shaped of a plate and includes a coupling unit 123, preferably a first coupling unit 122 and a second coupling unit 123 formed on its one surface. The second electrode tab is connected to the protection circuit board by a coupling unit (123, 422, 522) and the temperature sensitive element is in the vicinity of the coupling unit and/or the second electrode tab. In an embodiment of the present invention, the first coupling unit 122 is connected to a positive electrode tab 111 of the battery cell 110 and the second coupling unit 123 is connected to a negative electrode tab 112 of the battery cell 110. In the battery cell 110, the positive electrode tab 111 and the negative electrode tab 112 are generally positioned on the first coupling unit 122 and the second coupling unit 123 of the protection circuit board 120 to then be connected thereto by soldering or welding, but aspects of the present invention are not limited thereto.

In addition, in an embodiment of the present invention, the circuit module 150 provided on one surface of the protection circuit board 120 may also be electrically connected to the temperature sensitive element , e.g. a thermistor, 130 positioned in the vicinity of the second coupling unit 123, preferably the coupling unit 123 is spaced a distance of equal to or less than 3 mm from the temperature sensitive element, preferably 0,0 mm to 3.0 mm, optionally 0.05 mm to 2.5 mm, optionally 0.10 to 2.0 mm. Therefore, in an embodiment of the present invention, as will later be described, a signal of measuring a temperature of the battery cell 110 sensed by the temperature sensitive element, e.g. a thermistor, 130 may be transferred to the circuit module 150 through a pattern of the protection circuit board 120.

In addition, in an embodiment of the present invention, the protection circuit board 120 may further include a third coupling unit 124 on its one surface to be connected to the flexible printed circuit board 140. The third coupling unit 124 is formed in number to correspond to terminals of the flexible printed circuit board 140. The flexible printed circuit board 140 may also be positioned in the third coupling unit 124 to then be connected by welding or soldering, but aspects of the present invention are not limited thereto.

In an embodiment of the present invention, the temperature sensitive element is connected to the protection circuit board by physical contact. The temperature sensitive element, preferably a thermistor, 130 may measure the temperature of the battery cell 110 using resistive components varying according to temperature. The thermistor 130 may preferably be a positive temperature coefficient (PTC) thermistor or a negative temperature coefficient (NTC) thermistor. In addition, the temperature sensitive element, preferably a thermistor, 130 may be a provided as a chip the temperature sensitive element, e.g. a chip thermistor, so as to provide an electrical connection without a wire.

The temperature sensitive element, e.g. a thermistor, 130, is formed on one surface of the protection circuit board 130. Specifically, the temperature sensitive element, e.g. a thermistor, 130 may preferably also be formed in the vicinity of the second coupling unit 123 of the protection circuit board 130. The temperature sensitive element, e.g. a thermistor, 130 is preferably formed in the vicinity of the negative electrode tab 112 of the battery cell 110 coupled to the second coupling unit 123. Here, the temperature sensitive element, e.g. a thermistor, 130 may be positioned at a distance of 3 mm or less from the negative electrode tab 112, preferably 0,0 mm to 3.0 mm, optionally 0.05 mm to 2.5 mm, optionally 0.10 to 2.0 mm.. In this case, the temperature of the battery cell 110 can be accurately sensed from the negative electrode tab 112. In addition, in a preferred embodiment, since the temperature of the battery cell 110 can be more accurately as the temperature sensitive element, e.g. a thermistor, 130 gets closer to the negative electrode tab 112, a lower limit of the distance between the temperature sensitive element, e.g. a thermistor, 130 and the negative electrode tab 112 is not separately defined.

In a case where a thermal cut-off (TCO) is formed in the positive electrode tab 111 of the battery cell 110, a spatial limitation in installing the temperature sensitive element, e.g. a thermistor, 130 may be generated due to presence of the TCO. In addition, if heat of the TCO is sensed by the temperature sensitive element, e.g. a thermistor, 130, it is difficult to accurately measure the temperature of the battery cell 110. In addition, in general, the negative electrode tab 112 generates a larger amount of heat than the positive electrode tab 111. Thus, the temperature sensitive element, e.g. a thermistor, 130 is preferably formed to be closer to the negative electrode tab 112 than to the positive electrode tab 111.

In addition, although not separately illustrated, in an embodiment of the present invention, thermally conductive silicon may further be formed a surface, optionally at outer peripheries, of the temperature sensitive element, e.g. a thermistor, 130 and the second, preferably negative, electrode tab 112 of the battery cell 110. Therefore, compared to the ordinary air, the heat of the second, preferably negative, electrode tab 112 can be transferred to the temperature sensitive element, e.g. a thermistor, 130 without loss, thereby more accurately measuring the temperature.

The flexible printed circuit board 140 is preferably coupled to the third coupling unit 124 on one surface of the protection circuit board 120. The flexible printed circuit board 140 basically includes an insulation layer 141 and has a plurality of first terminals 143 formed at one end of the insulation layer 141 and a plurality of second terminals 143 formed at the other end of the insulation layer 141. The first terminals 142 correspond to and are connected to the third coupling unit 124 of the protection circuit board 120 and the second terminals 143 correspond to and are connected to corresponding regions of the circuit module 150, respectively. In such a manner, the flexible printed circuit board 140 electrically connects the protection circuit board 120 and the circuit module 150 to each other.

The circuit module 150, when present, preferably includes a plurality of conductive pads 151 and is electrically connected to the flexible printed circuit board 140 by contacts between the plurality of second terminals 143 and the plurality of conductive pads 151. The circuit module 150 is electrically connected to the battery cell 110 through the flexible printed circuit board 140 and the protection circuit board 120. Although not shown, the circuit module 150 includes a circuit formed on an insulating substrate to enable charging and discharging of the battery cell 110, and a protection circuit for preventing the battery cell 110 from being over-charged or over-discharged. In addition, the circuit module 150 includes a connecting unit 152 installed to be electrically connected to an external load or an external electric device such as a charger. The insulating substrate constituting the circuit module 150 may be a rigid board.

Hereinafter, a configuration of a battery pack according to another embodiment of the present invention will be described.

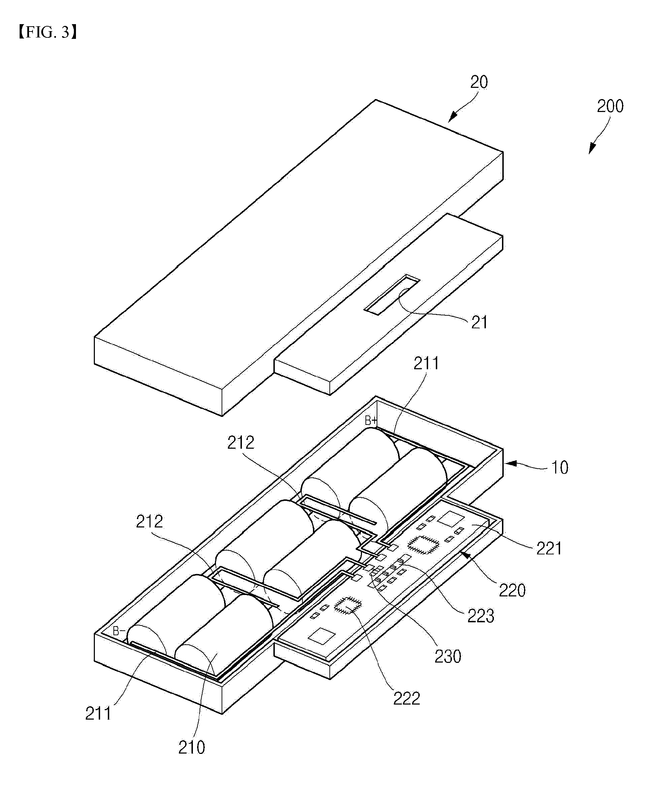

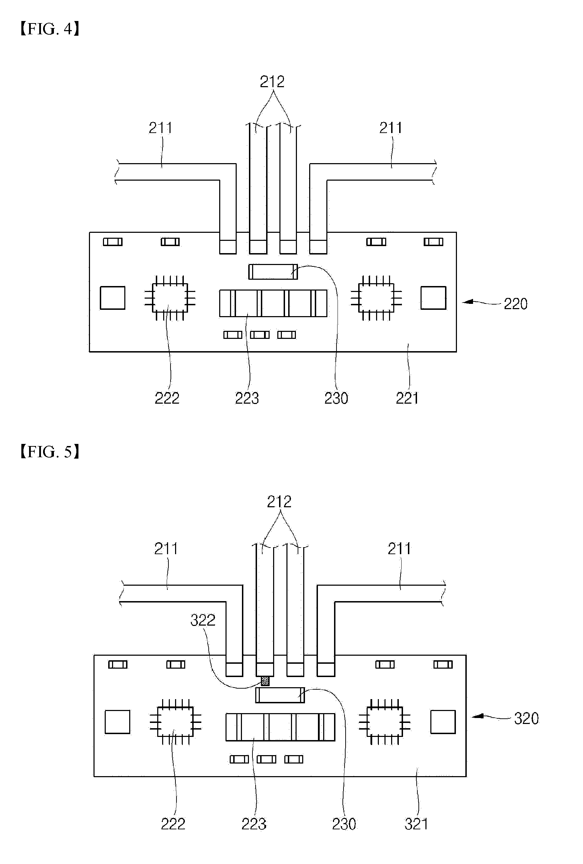

FIG. 3 is an exploded perspective view of a battery pack according to another embodiment of the present invention and FIG. 4 is a plan view illustrating a state in which a temperature sensitive element, e.g. a thermistor, is connected to a protection circuit board in the battery pack shown in FIG. 3. The same configurations and the same functional components are denoted by the same reference numerals of the previous embodiment, and the following description will focus on differences between the present and previous embodiments.

In an embodiment of the present invention, the battery pack comprises at least two battery cells (210) and the conductive tabs (211 and 212) connect positive electrodes and negative electrodes of the least two battery cells laterally positioned in parallel to establish parallel connections between the battery cells and, optionally, the conductive tabs are positioned between the battery cells longitudinally adjacent to each other or between each of the battery cells and the protection circuit board (220) to establish serial connections between the battery cells.

Referring to FIGS. 3 and 4, the battery pack 200 according to another embodiment of the present invention includes at least one battery cell 210 provided in a case consisting of a lower case 10 and an upper case 20, a protection circuit board 220 electrically connected to the battery cell 210, and a temperature sensitive element, e.g. a thermistor, 230 provided in the protection circuit board 120.

The battery cell 210 is a preferably cylindrical battery and its top and bottom surfaces have different polarities. The top surface of the battery cell 210 may be electrically connected to a positive electrode of an electrode assembly (not shown) in the battery cell 210 and the bottom surface of the battery cell 210 may be electrically connected to a negative electrode of the electrode assembly. In FIG. 3, B+ and B- indicated at opposite ends of battery cells 210 connected in series/parallel refer to high current terminals.

In addition, conductive tabs 211 and 212 are connected between the battery cell 210 connected to each other. In an embodiment of the present invention, the temperature sensitive element is in the vicinity of the area that the conductive tab is coupled to the protection circuit board. The conductive tabs 211 and 212 connect positive electrodes and negative electrodes of the battery cells 210 laterally positioned in parallel to establish parallel connections between the battery cells 210. In addition, the conductive tabs 211 and 212 are positioned between the battery cell 210 longitudinally adjacent to each other or between each of the battery cells 210 and the protection circuit board 220 to establish serial connections between the battery cells 210. The conductive tabs 211 and 212 may preferably be made of one selected from the consisting of nickel (Ni), copper (Cu), aluminum (Al), gold (Au) and equivalents thereof, but aspects of the present invention are not limited thereto. In addition, preferably the conductive tabs 211 and 212 are substantially 'U' shaped, thereby stably connecting the battery cells 210 using elastic forces. However, the present invention does not limit the shapes of the conductive tabs 211 and 212 to that illustrated herein. Rather, the conductive tabs 211 and 212 may also be simply shaped of plates.

In addition, since the conductive tabs 211 and 212 are thermally conductive, heat generated from the battery cells 210 can be easily transferred without loss. Therefore, as will later be described, the conductive tabs 211 and 212 transfer the heat generated from the battery cells 210 to the temperature sensitive element, e.g. a thermistor, 230 positioned in the vicinity of the conductive tabs 211 and 212, thereby accurately measuring the temperature of the battery cells 210.

The conductive tabs 211 and 212 may preferably include high current lines 211 positioned at opposite ends and sensing lines 212 positioned between the battery cells 210 connected to each other. The high current lines 211 are connected to the protection circuit board 220 and provide a path for applying charging/discharging current of the overall battery cells 210. In addition, preferably the high current lines 211 may also sense all voltage and current signals of the battery cell 210 to transfer the sensed signals to the protection circuit board 220. The sensing lines 212 are preferably connected to the high current lines 211 among the conductive tabs 211 and 212 of the battery cell 210, except for the outermost high current lines 211. The sensing lines 212 may preferably transfer the voltage signals between the battery cells 210 connected to each other to the protection circuit board 220, thereby allowing the protection circuit board 220 to identify voltage values of the battery cells 210 connected in series.

The protection circuit board 220 is preferably provided in the internal space of the lower case 10. The protection circuit board 220 preferably includes wiring patterns formed on at least one surface of a planar insulation layer 221, and at least one semiconductor device 222 formed on the one surface of a planar insulation layer 221. In addition, the protection circuit board 220 may preferably include a connector 223 provided on the one surface to be connected to an external device.

The protection circuit board 220 is electrically connected to the battery cell 210 through the conductive tabs 211 and 212. Therefore, the protection circuit board 220 may control charging and discharging of the conductive tabs 211 and 212.

Like in the previous embodiment, the temperature sensitive element, e.g. a thermistor, 230 may be provided as a chip temperature sensitive element, e.g. a chip thermistor, and is formed on one surface of the protection circuit board 220. Specifically, the temperature sensitive element, e.g. a thermistor, 230 is formed on the one surface of the protection circuit board 220 in the vicinity of the sensing lines 212 of the conductive tabs 211 and 212. The temperature sensitive element, e.g. a thermistor, 230 may be formed to be spaced a distance of 3 mm or less apart from the sensing lines 212, preferably spaced a distance of equal to or less than 3 mm, preferably 0,0 mm to 3.0 mm, optionally 0.05 mm to 2.5 mm, optionally 0.10 to 2.0 mm. If the temperature sensitive element, e.g. a thermistor, 230 is spaced less than 3 mm apart from the sensing lines 212, as described above in the previous embodiment, the heat transferred from the battery cell 210 through the sensing lines 212 can be easily sensed. In addition, thermally conductive silicon may preferably further be formed at an outer surface of the conductive tabs and/or temperature sensitive element, preferably ends of the sensing lines 212 and the outer periphery of the temperature sensitive element, e.g. a thermistor, 230, thereby reducing the loss of heat transferred to the temperature sensitive element, e.g. a thermistor, 230.

Meanwhile, in an embodiment of the present invention, the high current lines 211, instead of the sensing lines 212, may serve as a thermal conductor for the battery cell 210, thereby transferring heat to the temperature sensitive element, e.g. a thermistor, 230. However, since the high current lines 211 are preferably wider than the sensing lines 212, heat loss may be generated at the high current lines 211. Accordingly, it is more preferable to use the sensing lines 212 as the thermal conductor.

Hereinafter, a configuration of a battery pack according to still another embodiment of the present invention will be described.

FIG. 5 is a plan view illustrating a state in which a temperature sensitive element, e.g. a thermistor, is connected to a protection circuit board in a battery pack according to still another embodiment of the present invention.

In an embodiment of the present invention, the battery pack further comprises a thermally conductive pattern (322) extending from the coupling unit towards the temperature sensitive element (230).

Referring to FIG. 5, the battery pack according to still another embodiment of the present invention includes at least one battery cell (not shown), a protection circuit board 320 electrically connected to the battery cell, and a temperature sensitive element, e.g. a thermistor, 230 provided in the protection circuit board 320.

In a preferred embodiment, the protection circuit board 320 includes a thermally conductive pattern 322 on one surface of an insulation layer 321, the thermally conductive pattern 322 extending from regions of conductive tabs 211 and 212 corresponding to lower portions of sensing lines 212 toward the temperature sensitive element, e.g. a thermistor, 230. The thermally conductive pattern 322 may be preferably made of a material having good thermal conductivity, such as nickel (Ni), copper (Cu), aluminum (Al), gold (Au) and equivalents thereof. The thermally conductive pattern 322 transfers the heat from the sensing lines 212 to a region near the temperature sensitive element, e.g. a thermistor, thermistor, 230 or to a lower portion of the temperature sensitive element, e.g. a thermistor, 230, thereby allowing the temperature sensitive element, e.g. a thermistor, 230 to accurately measure the temperature of the battery cell without heat loss.

Hereinafter, a configuration of a battery pack according to still another embodiment of the present invention will be described.

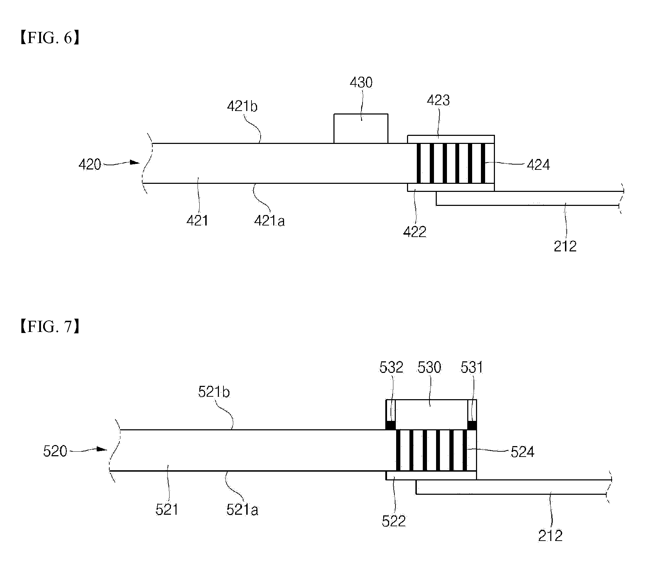

FIG. 6 is a cross-sectional view illustrating a state in which a temperature sensitive element, e.g. a thermistor, is connected to a protection circuit board in a battery pack according to still another embodiment of the present invention.

In an embodiment of the present invention, the connection unit comprises a first thermally conductive pattern (422) formed on first surface (421a) of the protection circuit board, and a second thermally conductive pattern (423) formed on the second surface (421b) opposite to the first surface (421a) and corresponding to the first thermally conductive pattern (422) and the temperature sensitive element is formed on the second surface (421b), wherein the first and second conductive patterns are connected by thermally conductive vias (424).In an embodiment of the present invention, the temperature sensitive element (430) is adjacent, but electrically insulated from, the second thermally conductive pattern (423), and the thermally conductive vias (424) extend through the protection circuit board (421) between the first thermally conductive pattern (422) and the second thermally conductive pattern (423).

Referring to FIG. 6, the battery pack according to still another embodiment of the present invention includes at least one battery cell (not shown), a protection circuit board 420 electrically connected to the battery cell, and a the temperature sensitive element, e.g. a thermistor, 430 provided in the protection circuit board 420.

In a preferred embodiment, the protection circuit board 420 is connected to the battery cell through conductive tabs. In addition, the protection circuit board 420 basically includes an insulation layer 421 and includes a first thermally conductive pattern 422 formed on its one surface 421a, specifically further extending from lower portions of sensing lines 212, a second thermally conductive pattern 423 formed on the other surface 421b opposite to the one surface 421a and corresponding to the first thermally conductive pattern 422, and a via 424 corresponding to the first and second thermally conductive patterns 422 and 423 and connecting the first and second thermally conductive patterns 422 and 423 to each other while passing through the insulation layer 421 in a thickness direction of the insulation layer 421.

The first thermally conductive pattern 422, the second thermally conductive pattern 423 and the via 424 may preferably be made of a material having good thermal conductivity, such as nickel (Ni), copper (Cu), aluminum (Al), gold (Au) and equivalents thereof, like the thermally conductive pattern 322 of the previous embodiment, thereby transferring heat of the battery cell transferred from the sensing lines 212 to the temperature sensitive element, e.g. a thermistor, 430.

The temperature sensitive element, e.g. a thermistor, 430 is formed on the other surface 421b of the insulation layer 421 of the protection circuit board 420 and is formed to be spaced less than or equal to 3 mm apart from the second thermally conductive pattern 423 preferably spaced a distance of equal to or less than 3 mm, preferably 0.0 mm to 3.0 mm, optionally 0.05 mm to 2.5 mm, optionally 0.10 to 2.0 mm. In addition, thermally conductive silicon may further be formed at an outer surface of the conductive pattern and/or temperature sensitive element, preferably at outer peripheries of the temperature sensitive element, e.g. a thermistor, 430 and the second thermally conductive pattern 423, thereby reducing heat loss when the heat is transferred.

Hereinafter, a configuration of a battery pack according to still another embodiment of the present invention will be described.

FIG. 7 is a cross-sectional view illustrating a state in which a temperature sensitive element, e.g. a thermistor, is connected to a protection circuit board in a battery pack according to still another embodiment of the present invention.

In an embodiment of the present invention the connection unit comprises a first thermally conductive pattern (522) formed on a first surface (521 a) of the protection circuit board and thermally conductive vias (524) extend from the first surface (521a) to a second surface (521b), and the temperature sensitive element is formed on the second surface (521b).

Referring to FIG. 7, the battery pack according to still another embodiment of the present invention includes at least one battery cell (not shown), a protection circuit board 520 electrically connected to the battery cell, and a temperature sensitive element, e.g. a thermistor, 530 provided in the protection circuit board 520. The electrodes of the temperature sensitive element are displayed (531 and 532).

The protection circuit board 520 basically includes an insulation layer 521 and includes a thermally conductive pattern 522 formed on its one surface 521a, specifically further extending from lower portions of sensing lines 212, and a via 524 corresponding to a region of the thermally conductive pattern 522 while passing through the insulation layer 521 in a thickness direction of the insulation layer 521. Unlike in the previous embodiment, the battery pack according to still another embodiment of the present invention is not provided with a separate thermally conductive pattern on the other surface 521b opposite to the one surface of the insulation layer 521. The thermally conductive pattern 522 and the via 524 may preferably also be made of a material having good thermal conductivity, such as nickel (Ni), copper (Cu), aluminum (Al), or gold (Au).

Meanwhile, the temperature sensitive element, e.g. a thermistor, 530 is formed at a region corresponding to the thermally conductive pattern 522 on the other surface 521b of the insulation layer 521 of the protection circuit board. The temperature sensitive element, e.g. a thermistor, 530 is positioned above the via 524. Accordingly, the heat of the battery cell may be transferred through the sensing lines 212, the thermally conductive pattern 522 and the via 524. In addition, a thermally conductive silicon is further formed on an outer surface, e.g. an outer periphery, of the temperature sensitive element, e.g. a thermistor, 530, thereby reducing the loss of heat transferred to the temperature sensitive element, e.g. a thermistor, 530.

While the battery pack of the invention has been described in connection with certain embodiments, it will be understood by those skilled in the art that the invention is not limited to the disclosed embodiment, but rather is intended to cover various modifications included within the scope of the appended claims.

## Claims

1. A battery pack (100, 200), comprising:
at least one battery cell (110, 210) with a first electrode tab (111, 211) and a second electrode tab (112, 212);
a protection circuit board (120, 220, 320, 420) electrically connected to at least one battery cell; and
a temperature sensitive element (130, 230, 430) provided on the protection circuit board; wherein the second electrode tab is connected to the protection circuit board by a coupling unit (123, 422, 522) and the temperature sensitive element is in the vicinity of the coupling unit and/or the second electrode tab.

2. The battery pack as claimed in claim 1, wherein the second electrode tab and/or the coupling unit are spaced a distance of equal to or less than 3 mm from the temperature sensitive element.

3. The battery pack as claimed in claim 1 or claim 2, further comprising a thermally conductive pattern (322) extending from the coupling unit towards the temperature sensitive element (230).

4. The battery pack as claimed in any of claims 1 to 3, wherein a thermally conductive silicon is formed at a surface of the temperature sensitive element (130, 230, 330, 430) and/or a surface of the second electrode tab (112, 212).

5. The battery pack as claimed in any of claims 1 to 4, wherein the temperature sensitive element (130, 230, 330, 430) is a thermistor.

6. The battery pack as claimed in any of claims 1 to 5, wherein the first electrode tab is a positive electrode tab and the second electrode tab is a negative electrode tab, and optionally a thermal cut-off (TCO) is formed in the positive electrode and the temperature sensitive element is closer to the negative electrode tab than to the positive electrode tab.

7. The battery pack as claimed in any of claims 1 to 6, further comprising a flexible printed circuit board (140) and a circuit module (150), wherein the flexible printed circuit board electrically connects the protection circuit board and the circuit module to each other.

8. The battery pack as claimed in any of claims 1 to 7, wherein the temperature sensitive element is connected to a protection circuit board by physical contact.

9. The battery pack as claimed in any of claims 1 to 6, wherein the battery pack comprises at least two battery cells (210) and the conductive tabs (211 and 212) connect positive electrodes and negative electrodes of the least two battery cells laterally positioned in parallel to establish parallel connections between the battery cells and, optionally, the conductive tabs are positioned between the battery cells longitudinally adjacent to each other or between each of the battery cells and the protection circuit board (220) to establish serial connections between the battery cells.

10. The battery pack of claim 9, wherein the temperature sensitive element is in the vicinity of the area that the conductive tab is coupled to the protection circuit board.

11. The battery pack of claim 9 or claim 10, wherein the conductive tab comprises a high current line (211) and a sensing line (212) and the temperature sensitive element (230) is formed in the vicinity of the sensing line 212.

12. The battery pack as claimed in any of claims 1 to 6 and 9 to 11, wherein the connection unit comprises a first thermally conductive pattern (422) formed on first surface (421a) of the protection circuit board, and a second thermally conductive pattern (423) formed on the second surface (421b) opposite to the first surface (421a) and corresponding to the first thermally conductive pattern (422) and the temperature sensitive element is formed on the second surface (421b), wherein the first and second conductive patterns are connected by thermally conductive vias (424).

13. The battery cell as claimed in any of claims 1 to 6 and 9 to 12, wherein the connection unit comprises a first thermally conductive pattern (522) formed on a first surface (521a) of the protection circuit board and thermally conductive vias (524) extend from the first surface (521 a) to a second surface (521b), and the temperature sensitive element is formed on the second surface (521b).

14. The battery cell as claimed in claim 12, wherein the temperature sensitive element (430) is adjacent, but electrically insulated from, the second thermally conductive pattern (423), and the thermally conductive vias (424) extend through the protection circuit board (421) between the first thermally conductive pattern (422) and the second thermally conductive pattern (423).
